# EUROPEAN PATENT APPLICATION

(11) **EP 2 599 606 A1**
(43) Date of publication of application: **05.06.2013**
(21) Application number: 12195058.8
(22) Date of filing: 30.11.2012
(51) Int. Cl.: B29C 37/00, B29C 44/44, B05D 1/02

(54) **Method for the realization of objects of polystyrene covered with a hardened layer of polymeric material, preferably objects of decor and furniture**

(30) Priority: 02.12.2011 IT PI20110137
(71) Applicant: Caponi, Annarita, 56034 Casciana Terme (PI) (IT)
(72) Inventor: Salvadori, Fabio, 56034 Casciana Terme (PI) (IT)
(74) Representative: Emmi, Mario

(57) **Abstract**

The present invention concerns a method for obtaining an object and comprising the operations of temperature moulding in a mould (1) of a material in polystyrene (20) and the subsequent operation of covering of the object obtained, at least in part, with a layer of polymeric material in such a way that, once hardened, the polymeric material forms a solid shell (11).

Alternatively, the distribution of the polymeric material on the walls of the mould can take place first, and, following its hardening, the hot forming in the mould can be made.

## Description

### Technical field

The present invention refers to an innovative technology that allows to obtain in a large series various products in polystyrene covered with a layer of hardened polymeric material which forms a particularly hard external shell.

### Background art

European patent application EP2346374 in the name of Salvadori Fabio, et al has long been known and public.

This patent application describes an absolutely innovative technology that is addressed to the realization of furniture in general, for example bed springs, chairs, mattresses, etc.

The technology is based on the manufacturing in utensil machines of one or more blocks of polystyrene according to pre-determined forms, in such a way as to obtain the final form of the desired object. The polystyrene is then covered externally, for example through spraying, with a layer of polymeric material which, once spread, is left to harden and creates an external covering of a pre-determined thickness which confers structural resistance and hardness to the structure thus realized.

In this way, a chair, for example, can be realized with the core in polystyrene and then it can be rendered compact and resistant to the loads that it will have to bear through said covering treatment.

The technical effect will be therefore that of obtaining extremely light products maintaining mechanical characteristics equivalent to the same objects but that are produced with traditional materials and with traditional technologies (such as wood for chairs or metal for the springs of mattresses). The hardening of the polymeric material in fact creates a particularly hard and resistant shell that serves to absorb the load.

Moreover, always through such a technology, the production costs are significantly reduced since the cost of polystyrene is much lower with respect to the cost of the metal or the wood generally used for the realization of such objects.

Last, the production times are significantly reduced since the manufacturing of polystyrene is extremely fast with respect to the manufacturing of metal materials or anyway much more consistent materials, such as wood.

Nevertheless, the patent application in question discusses the manufacturing of polystyrene according to any technology in machine tools, for example through hot wire cutting, CNC milling machines, laser, etc.

The whole anyway limits significantly the productivity and the quality of the final product since the manufacturing cycles in the machine tools are longer and require a precise planning. Many times, according to the forms to realize, it is necessary to foresee many parts to be composed subsequently. The whole therefore slows down production and increases production costs.

Last, at the end of a manufacturing of roughing that allows to approximately obtain the final form of the product, it is anyway necessary to continue with a subsequent cycle of surface finishing. Not only does an imprecise surface finishing render the piece imperfect, but it is also the cause of an increase in the quantity of polymeric material required to apply on the worked surface since it is in part going to be applied into the microscopic crackings determined by the surface wrinkledness itself, with increases in quantity even in the order of the 30%.

The publication FR2028644 describes a production process of objects in polystyrene through the forming in mould of the polystyrene and the subsequent covering of the final form obtained with an epoxy resin that has a hardening effect. Nevertheless, the publication FR2028644 teaches the application of a layer of acrylic varnish directly on the body in polystyrene formed in such a way that the resin does not adhere directly on the polystyrene but rather on said covering layer of varnish. This is because the epoxy resin tends to corrode and ruin the polystyrene, therefore it is necessary to spread a protective layer.

The use of the resin therefore requires an additional phase, that is the formation of the layer of acrylic varnish, which certainly renders the realization of the final product more expensive. Moreover, the epoxy resin does not allow to obtain satisfying hardness and resistance characteristics. The covered object cannot bear heavy loads if covered with epoxy resin and therefore results useless for the present aims.

The publication JP 56028834 describes a process that is specifically based on the realization of a shoe with the sole in polystyrene and covered with a thin film of resin or rubber. As per the preceding French document, resin or rubber do not allow to reach acceptable resistance and hardness values.

Moreover, the process described is particularly complex and expensive since it foresees two subsequent and different phases. In the first phase the form of the object in polystyrene is produced through a first mould which is then arranged into a second specific mould in order to inject the resin and make the covering. The second mould has to copy exactly the form of the final object and has to be of a slightly bigger size in such a way as to leave a minimum space interposed.

The thermoplastic resin or rubber is then injected in such a way as to fill this free space interposed, thus adhering to the body and generating a thin layer of covering that has a substantially aesthetic purpose.

It is obvious that this procedure is complex and very expensive because it requires the realization of a second mould that has to have very precise tolerances to obtain the covering film. Moreover, the document teaches the use of a resin, which cannot confer sufficient resistant mechanical characteristics. The present document describes the realization of a covering film, therefore a very thin layer in the order of a few tenths of a millimeter, which cannot in any way allow to satisfy the pre-fixed mechanical characteristics. Moreover, following the hardening of the resin, the removal of the mould results really difficult since it is glued also around the walls of the mould.

### Disclosure of invention

It is therefore the aim of the present invention to provide a new production method that allows to solve, at least in part, said technical inconveniences.

In particular, it is the aim of the present invention to provide an innovative method for the production of objects in general (from furniture and decor to fitness and game equipment, structures, coverings, objects in general) which are provided with a core in polystyrene covered, at least in part, with a layer of polymeric material but that are reproducible in large quantities, with a good surface finishing and with a good reproducibility both of the mechanical characteristics and of the surface finishing itself.

It is also the aim of the present invention to provide an innovative method that allows to obtain a final form which, when it is covered with the polymeric material, is such as to allow to save a quantity of polymer that is applied to the surface (external or internal) of the object realized.

It is also the aim of the present invention to provide a method that allows, in a simple and economical way, to obtain a final form covered with polymeric material.

These and other aims are reached with the present method for the production of an object in general as per claim 1.

The method comprises the operations of:
- Temperature forming in a mould (1) of a material in polystyrene (20);
- Removal of the object obtained from the mould;

In accordance with the invention, it is then foreseen an operation of arrangement of the object in correspondence of one or more nozzles (18) and;
- Covering of the object obtained, at least in part, with a layer in polyurethane in such a way that, once hardened, the polyurethane forms a solid shell (11) that covers the object. Such a covering procedure foresees the spraying of the polyurethane through said nozzles (18).

This solution solves the technical problems of the background art for the following reasons:

The use of polyurethane implies that, now, it is not necessary anymore to arrange a covering layer of protective acrylic varnish but the covering can be sprayed without problems directly on the polystyrene. The polyurethane does not harm the polystyrene and this, obviously, simplifies the procedure and renders it less expensive.

The use of polyurethane, instead of rubber or resins as indicated in FR2028644 or JP 56028834, allows to obtain much higher hardness and resistance values.

For example, a chair in polystyrene, covered with said polyurethane, is capable of bearing the load of a user exactly in the same way as a wooden chair.

In the same way, the use of nozzles that can be directed on the object in question simplifies significantly the procedure, with respect with what has been described in JP 56028834, because it is not necessary anymore the realization of expensive moulds with accurate tolerances where to make the covering. In this way, there is no risk of a lack of separation of the mould due to the hardening of the resin itself.

It is clear that a single mould can be used for simple objects, lacking undercut, and also many parts obtained each one in a mould and then combined among them and fixed through the polymeric material in a definitive form in case of complex forms with undercuts.

It is therefore clear that, in accordance with such a technology, also other technical inconveniences discussed are solved.

In particular, it is clear that the use of moulds makes the production process faster, allowing a more efficient production and a better reproducibility of the piece.

The present invention also allows to obtain much better surface finishings of the piece. In particular, the surface finishing will be such as to allow a saving of polymeric material of covering (even beyond the 30%) since it does not sediment now in the clefts of the surface wrinkledness.

Moreover, with such a technology, the overall resistance of the piece is benefitted, the surface layer now resulting more homogeneous and therefore with less micro defects.

Further, the waste of polystyrene material, with respect to the traditional manufacturing in machine tools, is eliminated, with great benefits for the environment.

Last, also the storage of the raw material, that is the polystyrene, allows an economization of the waste. In fact, polystyrene, not resulting in blocks as for the manufacturing in machine tools but instead in spheres, allows a great saving of volumes and or areas of storehouse.

Alternatively, unlike what is possible with machine tools, this technology allows to distribute the polymeric material on the internal walls of the mould (all or in part) and, once solidified, proceed with the normal hot forming, pouring the polystyrene into the mould.

The surface quality will be optimal and, as better explained below, an optimal continuity between the two materials (polystyrene and polymer) will be obtained.

It is also clear that the present technology can be used for the realization of any object in general. For example, furniture or parts of it, home or building accessories or accessories for the free time, such as tables, bookcases, shelves, wardrobes, furniture doors, kitchen cabinet doors, doors, rolling shutters, shutters, dividing walls, bathroom baths, self-standing insulation (ex. false ceilings, etc.), tanks, swimming-pool structures, waterborne elements and accessories (chairs, cots, décor elements, advertising objects), sports equipment (benches, surfboards, etc.), and so on, also stuffed.

Alternatively, it is here foreseen a method for obtaining an object in general comprising in succession the operations of:
- Covering, at least in part, of the internal walls of the mould with a layer of polyurethane before the forming and;
- Subsequent temperature forming into said mould (1) of a material in polystyrene (20) in such a way that, once hardened, the polyurethane forms a solid shell (11) that covers the body in polystyrene obtained.

This alternative allows always the covering with the polyurethane but, now, the nozzles are not necessary since the polyurethane itself has been previously spread in the walls of the mould.

This alternative has the further advantage of not requiring a passage of the final piece below the nozzles.

### Brief description of drawings

Further characteristics and advantages of the present method, in accordance with the invention, will result clearer with the description that follows of some embodiments, made to illustrate but not to limit, with reference to the annexed drawings, wherein:
- Figure 1 shows a general mould formed by a superior semi-shell or semi-mould and by an inferior semi-shell or semi-mould;
- Figure 2 shows a filling phase of a mould with pre-expanded spheres of polystyrene;
- Figure 3 shows a heating phase of the spheres into the mould with steam or other systems, for example hot air;

- Figure 4 shows a surface covering treatment with the polymeric material and the shell 11 obtained following its hardening;

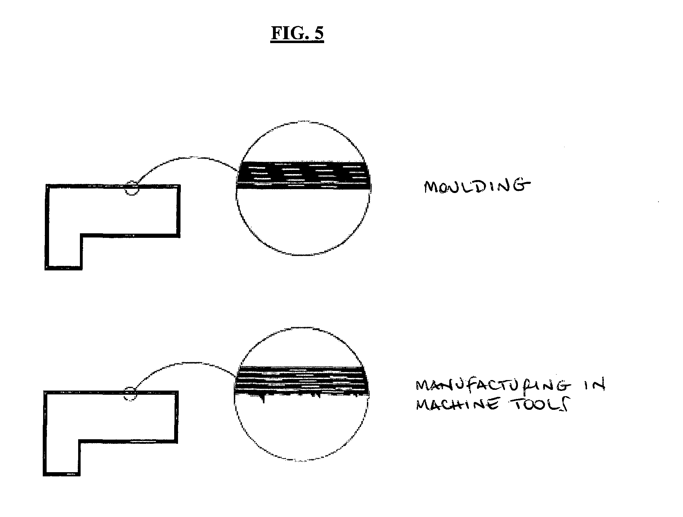

- Figure 5 shows a comparison between a surface finishing in machine tools and one in mould, highlighting the saving of polymeric material precisely through the use of such a technology in mould.

### Description of some preferred embodiments

The figures attached show the process in accordance with the invention.

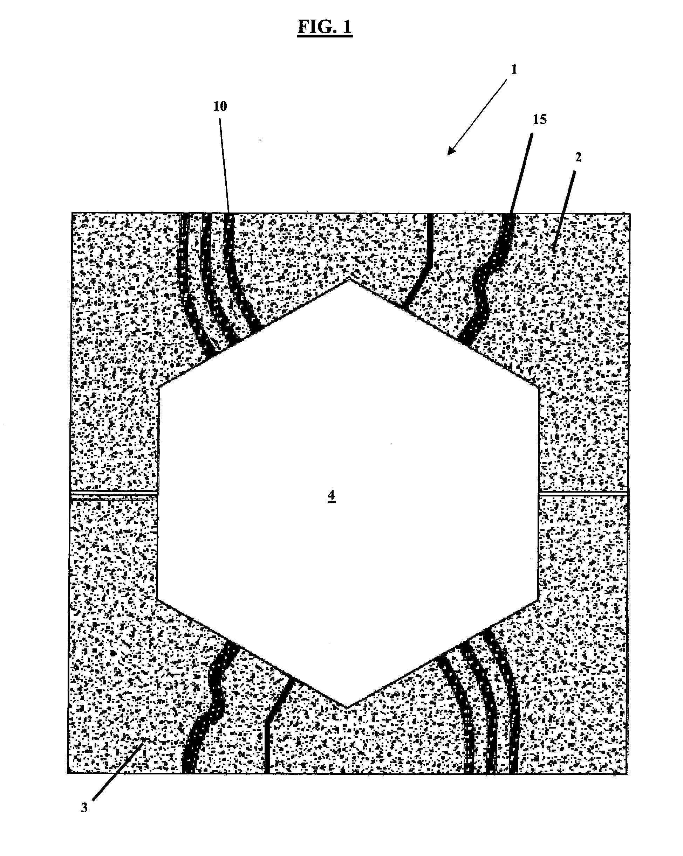

Figure 1, in particular, shows as a way of example a general mould 1 which is formed by a superior semi-shell 2 and an inferior semi-shell 3. Each semi-shell forms such a seat that, when the two semi-shells result coupled, an internal seat 4 is realized into which the material to form, in this case polystyrene, is introduced, as also described with clarity below.

Obviously, according to the production needs, the mould could also be composed of a single semi-shell closed superiorly, for example, by a removable flat surface.

The mould, as per the background art, foresees one or more channels for the insertion of the polystyrene and one or more vent channels for the steams produced. Figure 1 therefore schematizes, in an absolutely non-limiting manner, some channels 10 that are obtained in the mould and through which to introduce the polystyrene and other aeration channels 15 of the steams produced.

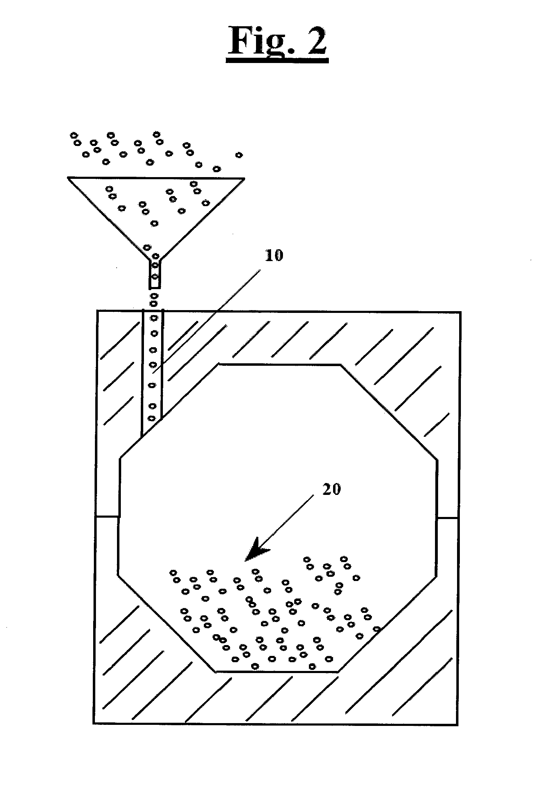

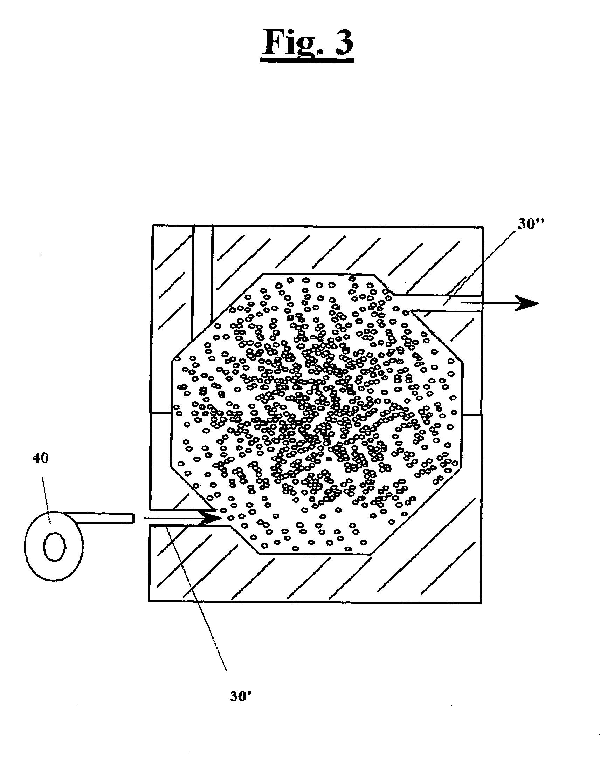

In accordance with a first possible production method, the polystyrene is formed inside a mould through the following process: a plurality of pre-expanded spheres 20 of polystyrene (obtained according to the traditional process of pre-expansion inside specific machines) are poured into a mould as shown in figure 2 through one or more of said insertion channels 10. Figure 2 schematizes a pouring operation of said spheres into the mould which fill the internal seat 4 of the mould. Inside the mould it is then made to circulate a hot flow at a temperature of around 110°-120°C, for example air or current of steam through an appropriate circulation 30 formed by specific channels (see schematization of figure 3). Figure 3, just for clarity purposes, represents a generator of steam 40 that inputs steam into the mould through an inlet channel 30'. The steam circulates inside the mould, causing the fusion and the junction of the spheres of polystyrene, to then exit from one or more outlet channels 30". The heat allows the completion of the expansion of the spheres, causing their reciprocal union and the formation of the final object that will assume the form of the seat 4.

In addition, said vent channels 15 of the gases can be foreseen or, indifferently, said channels can coincide at least in part with the channels 30 described.

Of course, the mould can then foresee appropriate extractors through which to operate the separation of the piece formed in the seat 4. Subsequently, once the object formed is removed from the mould, it is covered with the polymeric material, as described in the preceding patent application EP2346374**,** inserted as reference in the present description.

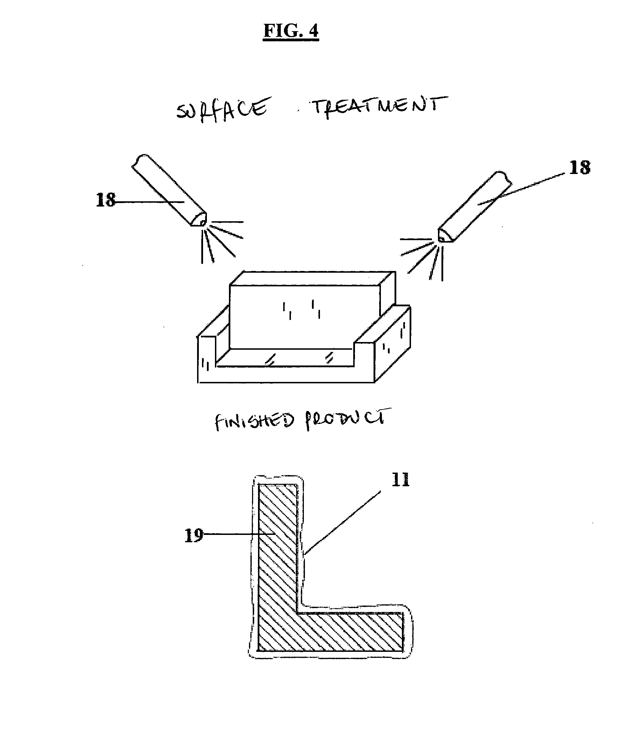

In particular, as schematized in figure 4, the object in polystyrene is externally covered with a layer of polymeric material 11 of a pre-determined thickness, uniformly distributed or distributed also in variable quantities on the piece. The covering can vary in thickness according to the object obtained, such as from the tenth of a millimeter to one centimeter. The greater the thickness is, the better the technical characteristics of the object obtained will be. For example, thicknesses in the order of the half centimeter or of the centimeter allow bearing structures such as chairs to result particularly solid, even if they remain light.

Exactly as described in the previously discussed patent application EP2346374, the polymer used can foresee a polyurethane composed of pre-determined percentages of Polyol and Isocyanate. In addition, various methods of distribution of the polymeric material can be used on the surface of interest of the object. A manual method (spatula) can be used, for example, as well as automatized distribution systems such as spraying or injection. Figure 4 shows just for clarity purposes a procedure of spraying through nozzles 18.

Figure 4 shows, always in an absolutely schematic and non-limiting manner for the present invention, a spraying operation on a sofa structure.

The drying of the polymeric material, in order that it forms a rigid shell 11, can take place in calm air, in turbulent air or in heated air (into specific drying ovens).

Obviously, if the object has undercuts, this can be realized in many parts, each one in a mould and in which each part is combined with the other one through glue or other mild junction systems. Once the parts have been combined between them the polymeric layer is spread which, once solidified, allows the formation of a single solid body.

In a second embodiment of the invention it would be possible to melt directly the polystyrene into an appropriate heated container and then pour it directly into the mould in which it solidifies, acquiring the final form.

Alternatively, other equivalent heating means to raise the temperature of the mould can be used. For example, hot air or even electrical resistances that heat the internal seat of the mould.

The polymeric material that can be used is selected from the group comprising at least one of the following: polyurethane, polyacetate, polycarbonate, resin, hardening resin and acrylic resin, polyethylene terephthalate (PET), glue, jointing cement, rubber, and/or their mixtures, compact or expanded, rigid or expanded.

In a further realization variant of the invention, it would also be possible to foresee, before the pouring into the mould of the spheres of polystyrene, the spraying or anyway the distribution of the covering polymeric material directly on the internal walls of the mould in the point in which it is wanted that said polymer covers externally the final object (therefore, for example, a uniform covering of the entire internal form of the mould). Subsequently, the normal procedure of insertion of the pre-expanded spheres of polystyrene and its ordinary forming is foreseen, raising the temperature in the mould, as described above.

In this way, the object obtained and extracted from the mould is already covered eternally with the shell 11.

The advantages of this alternative are various.

There exists a better cohesion and continuity between the two different materials. The polymeric material has hardening times in air that are very brief (around ten seconds) and once polymerized it is not possible to take it back to the liquid state, at least at said normal operation temperatures, of around 110°C. At said temperatures it has been experimented that a surface plastic layer is simply created, that is the surface of the shell opposite to that in direct contact with the walls of the mould becomes plasticized. Such a plastic layer extends inside the shell 11 towards the walls of the mould for a thickness that is of around the tenth of a millimeter to some millimeters. This plastic layer favours well the adhesion and the cohesion between the shell itself and the spheres of polystyrene that are poured into it.

Moreover, with this variant also the surface quality of the covering itself is high and does not require further finishings.

## Claims

1. A method for obtaining an object in general comprising the operations of:
- Temperature forming in a mould (1) of a material in polystyrene (20);
- Removal of the object obtained from the mould; **Characterized in that**:
- An operation of arrangement of the object in correspondence of one or more nozzles (18) is foreseen and;
- Covering of the object obtained, at least in part, with a layer of polyurethane in such a way that, once hardened, the polyurethane forms a solid shell (11) that covers the object, said covering procedure foreseeing the spraying of the polyurethane through said nozzles (18).

2. A method for obtaining an object in general comprising in succession the operations of:
- Covering, at least in part, of the internal walls of the mould with a layer of polyurethane before the forming and;
- Subsequent temperature forming in said mould (1) of the material in polystyrene (20) in such a way that, once hardened, the polyurethane forms a solid shell (11) that covers the body in polystyrene obtained.

3. A method, as per claim 1, wherein said nozzles guide the jet directly on the object in the parts to cover.

4. A method, as per claim 1 or 2, wherein the operation of forming foresees the pouring into the mould of pre-expanded spheres of polystyrene and their subsequent heating at such a temperature as to aggregate among them.

5. A method, as per claim 1 or 2, wherein the operation of forming foresees the leakage in the mould of fused polystyrene.

6. A method, as per one or more of the preceding claims, wherein the operation of forming takes place at a temperature comprised within a range between the 100°C and the 130° C, preferably between the 100°C and the 120°C.

7. A method, as per one or more of the preceding claims, wherein the spraying is made directly on the polystyrene not covered by other layers of material.

8. A method, as per one or more of the preceding claims, wherein an operation of injection of a hot flow inside the mould is foreseen.

9. A method, as per one or more of the preceding claims, wherein an operation of injection of hot air inside the mould is foreseen through one or more inlet conduits (30') in such a way that the hot air circulates in the mould.

10. A method, as per claim 2, wherein the operation of covering with polyurethane of the walls of the mould before the forming of the polystyrene takes place by manual spreading of said polymer on the walls of the mould to cover or by spraying through one or more nozzles (18).

11. A method, as per one or more of the preceding claims, wherein the shell (11) obtained foresees a thickness variable from the tenth of the millimeter to one or more centimeters, and preferably from one millimeter to one or more centimeters.

12. A method, as per one or more of the preceding claims, wherein the polymeric material that can be used is selected from the group comprising at least one of the following: polyurethane, polyacetate, polycarbonate, resin, hardening resin and acrylic resin, polyethylene terephthalate (PET), glue, jointing cement, rubber, and/or their mixtures, compact or expanded, rigid or expanded.
